# EUROPEAN PATENT APPLICATION

(11) **EP 0 955 763 A2**
(43) Date of publication of application: **10.11.1999**
(21) Application number: 99303480.0
(22) Date of filing: 04.05.1999
(51) Int. Cl.: H04M 3/42, H04Q 3/42

(54) **System and method for voice dialing**

(30) Priority: 06.05.1998 US 93622
(71) Applicant: AT&T Corp., New York, NY 10013-2412 (US)
(72) Inventor: Furman, Daniel Selig, Summit, New Jersey 07901 (US); Greenspan, Steven Lloyd, Scotch Plains, New Jersey 07076 (US); Rubin, Robert Michael, Morristown, New Jersey 07960 (US)
(74) Representative: Asquith, Julian Peter

(57) **Abstract**

A system and method provides a voice dialing service to a caller within a public switched telephone network (PSTN). The voice dialing service may supplement or replace existing directory services accessible through the PSTN. For example, by calling the voice dialing service and uttering the name of a city and state, the caller may be automatically connected to directory service listings for the locality including that city and state. In addition, the caller may utter the name of a company pursuant to the voice dialing service and automatically be connected to a national or local office of that company.

According to the method, a caller places a call to the voice dialing service using a service number. The call is received at a switch within the PSTN. Without authenticating the caller as a subscriber of the service, the caller is prompted to speak a company name. The spoken company name is received at the switch as an analog signal which is then digitized. Subsequently, the switch queries a database with the digitized spoken company name. The database includes a plurality of speech models, each speech model corresponding to a company name. In addition, the database has at least one destination number corresponding to each speech model. The speech model within the database having the closest match to the digitized spoken company name is identifying. Then, one of the destination numbers corresponding to the identified speech model is selected which is used to route automatically the call to the selected destination number.

## Description

### FIELD OF THE INVENTION

This application relates to a system and method for voice dialing by comparing an utterance from an originating caller with a speech model stored in a network database.

### BACKGROUND OF THE INVENTION

In the modern telephone age, many telephone services have become commonplace and their use have become a standard way of doing business. Some network telephone services include call forwarding, call waiting, video transfer and other voice and data services. These telephone services enhance business services for customers. However, in some instances even more enhanced services are desired. An example of such an enhanced service is voice dialing.

It is often inefficient for a caller to locate the telephone numbers certain entities to call. For example, the telephone number of directory assistance of a city or a company telephone number. It would be desirable if an originating caller could automatically connect to a company, the directory assistance of a city, or other entity by using a voice dialing service from any phone coupled to the public telephone network.

### SUMMARY OF THE INVENTION

According to the present invention, a system and method provide a voice dialing service to a caller within a public switched telephone network (PSTN). The voice dialing service may supplement or replace existing directory services accessible through the PSTN. For example, by calling the voice dialing service and uttering the name of a city and state, the caller may be automatically connected to directory service listings for the locality including that city and state. In addition, the caller may utter the name of a company pursuant to the voice dialing service and automatically be connected to a national or local office of that company.

According to the method, a caller places a call to the voice dialing service using a service number. The call is received at a switch within the PSTN. Without authenticating the caller as a subscriber of the service, the caller is prompted to speak a company name. The spoken company name is received at the switch as an analog signal which is then digitized. Subsequently, the switch queries a database with the digitized spoken company name. The database includes a plurality of speech models, each speech model corresponding to a company name. In addition, the database has at least one destination number corresponding to each speech model. The speech model within the database having the closest match to the digitized spoken company name is identifying. Then, one of the destination numbers corresponding to the identified speech model is selected, which is used to route automatically the call to the selected destination number.

In another embodiment of the invention, the query to the database further includes an area code or a number of the calling phone and the destination number is selected based on the area code or number of the calling phone. This feature allows one to use the voice dialing service to access a local branch of a company the maintains geographically dispersed branch locations. In addition the voice dialing service may be used to access entities other than a company, such as a directory listing service. In this embodiment, the caller would utter the names of a city and state to reach a directory service for the corresponding locality.

### BRIEF DESCRIPTION OF THE DRAWINGS

The foregoing and other objects and advantages of the present invention will be appreciated more fully from the following description, with reference to the accompanying drawings in which:

Figure 1 is a simplified block diagram of a telephone network including the intelligent network components suitable for use with the present invention.

Figure 2 is a block diagram of the platform for a Service Control Point.

Figure 3 shows tables correlating stored speech models with destination telephone numbers according to the present invention.

Figures 4A and 4B show a preferred method of providing voice dialing service for accessing a company or a directory listing service for a locality.

### DETAILED DESCRIPTION OF THE INVENTION

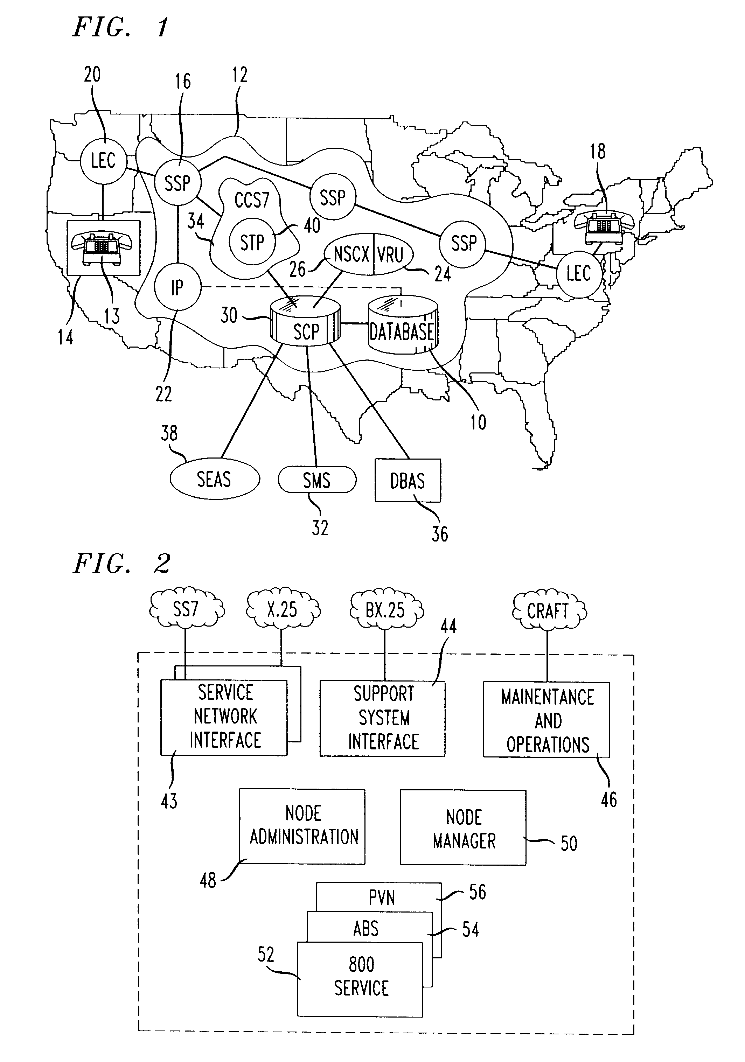

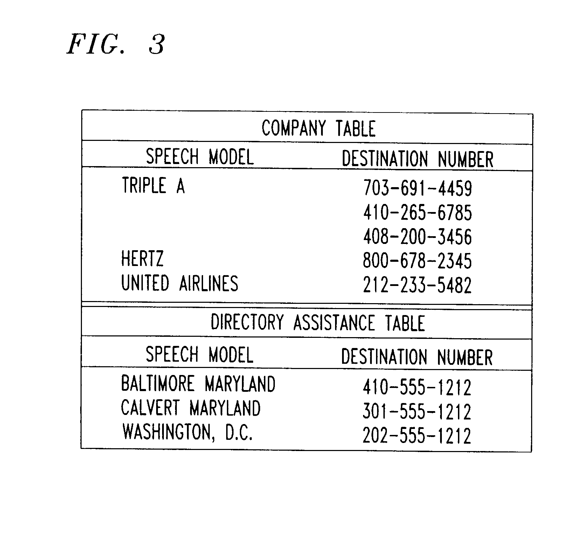

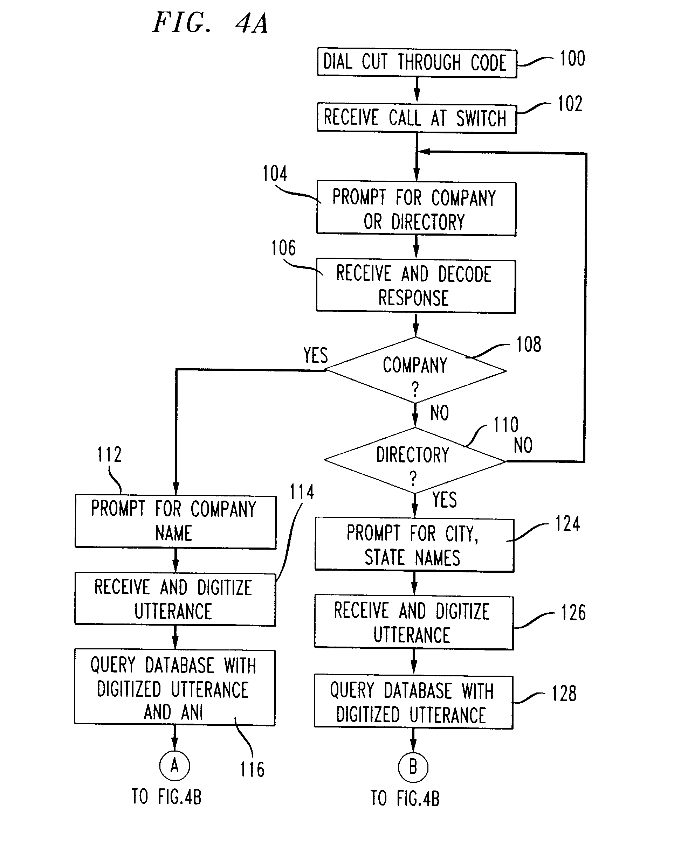

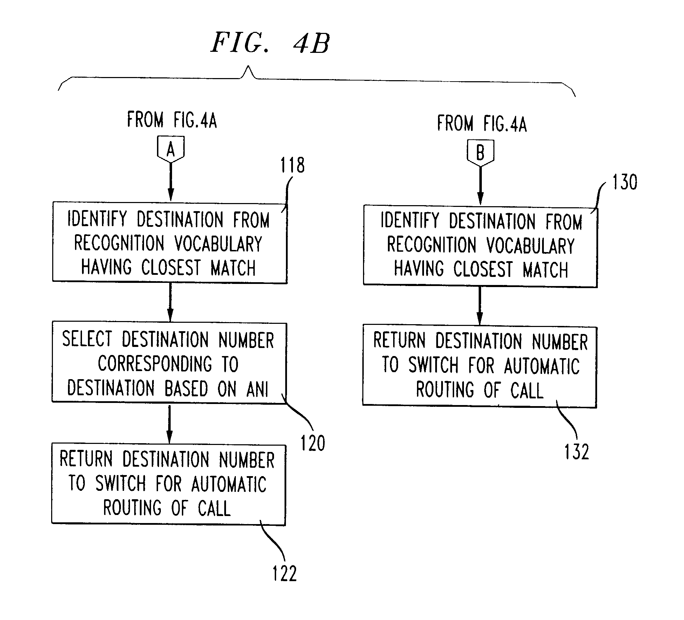

A method and system for voice dialing a destination party is disclosed in Figure 1 and the flowchart of Figures 4A and B. In accordance with the present invention, the method and system for voice dialing is provided as an "intelligent" service in which a database 10 contained within a public switched telephone network (PSTN) 12 stores a plurality of destination telephone numbers corresponding to a plurality of speech models. Referring to Figure 3, each speech model corresponds to an entity, for example a company or a city and state. Each speech model within the database 10 has at least one destination number corresponding to it. An originating call, dialed with a telephone number or cut through code corresponding to voice dialing service, is switched from an originating caller 13 located at a premises 14 through the network 12 to a predetermined switch, such as a network service switching point (SSP) 16 The database 10 is queried when the call includes an utterance from the caller, the utterance being typically prompted by the SSP 16. The call is automatically switched to a destination telephone number at a destination party (or entity) 18 when the utterance matches a speech model stored within the database 10.

At a high level, call processing according to the present invention involves three steps: (1) collecting information about the originating call, (2) processing the collected information for querying the database 10 containing the speech models and corresponding destination numbers, and (3) executing call processing instructions such as automatically switching the call to the destination telephone number. Several illustrative implementations are described below for each of these three steps, but one skilled in the art will appreciate that other variations and different combinations of the implementations as well as other high level steps can be used without departing from the spirit of the invention.

In an information collection step, the switched telephone network 12 collects information about the call. Typically, the originating caller initiates a call from a telephone 13. The telephone 13 may be a public pay telephone or a private telephone coupled to the PSTN directly or through a private branch exchange (PBX). The dialed number or call discriminator may be a cut through code, and 800 number sequence, or any other sequence for reaching the voice dialing service. According to the present invention, the caller is not prompted for a personal identification number or any other credential in order to use the voice dialing service. Callers are not authenticated. Rather, the voice dialing service is universally available with the cost of the service being passed on to the entities whose names and destination numbers appear in the database 10.

If an originating caller 13 has a proper discriminator, such as a cut-through code for entering the network through local exchange carrier (LEC) 20, the call is switched to a respective Service Switching Point 16. In the illustrated embodiment, the Service Switching Point 16 includes system hardware and software, as well as an associated intelligent processor 22, and converts the analog utterance received from the caller into a digital signal that can be analyzed and compared with the speech models stored in the database 10. The Service Switching Point 16 queries the database 10 with the digitized utterance, compares the speech models within the database 10 to the digitized utterance, and switches the call to a destination number corresponding to the speech model that has been matched.

Additionally, in one aspect of the present invention, the network 12 can determine if a call discriminator is present for switching the call through a Local Exchange Carrier (LEC) 20 to the respective Service Switching Point (SSP) 16 for querying the database 10. This discriminator can comprise an 800 number with appropriate ANI or a break-through code for allowing the call to go through the Local Exchange Carrier 20 into the network. Examples include the conventional (10 ATT) break-through code.

It is useful at this point to describe in general manner the key intelligent network elements than may be used to implement the preferred embodiment of the present invention. Intelligent network systems suitable for implementing the invention, in view of this disclosure, are well-known in the art and are commercially available from AT&T Corp. ("AT&T") under the A-I-Net™ advanced intelligent network family of products.

The intelligent network architecture superimposes on an existing telecommunication system a modular configuration of network elements to enhance telecommunications services. As noted before, the intelligent network includes a Service Switching Point (SSP) 16, as well as a Service Control Point (SCP) 30, and a Service Management System (SMS) 32. An intelligent processor 22 can be associated with the Service Switching Point 16 or the Service Control Point 30. One skilled in the art will appreciate that the intelligent network elements could be owned or controlled either by a Local Exchange Carrier (LEC) or an Interexchange Carrier (IXC), or by both. Typically, the intelligent network elements as described are owned by an IXC network.

The Service Switching Point 22 recognizes service requests, and requests call handling instructions from a Service Control Point 30. It executes those instructions to complete the telephone call. These instructions can be stored program switches, such as end offices or access tandem offices that interface with the CCS7 signaling network 34. They have appropriate software and service logic to interact through the signaling network with the Service Control Point 30. The Service Switching Point 16 allows intelligent network "triggering", i.e., detecting a condition that requires the Service Switching Point 16 to initiate the intelligent network service by sending a query to a Service Control Point 30.

As described below, the method and system for voice dialing in accordance with the present invention has its own "trigger profile," or set of data that assigns the service a unique point of entry into the intelligent network functions. The Service Switching Point 16 also formulates and transmits requests to the Service Control Point 30 and processes replies and requests from the Service Control Point. The Service Control Point 30 creates and plays intelligent network announcements by a Network Services Complex (NSCX) 26 via the service provider (e.g., the local exchange or inter-exchange carrier). It transmits messages and announcements to the Service Control Point 30 and to the originating caller 13. The Service Switching Point can be an AT&T SESS switch provisioned with AT&T's A-I-Net™ intelligent software to provide functionality. Additionally, the Service Switching Point 16 may have the well known Automatic Number Identification (ANI) capability enabling the SSP 16 to determine the telephone number of the calling device that initiated the call.

The Service Control Point 30 is an intelligent network element that stores call control and call routing instructions executed by the Service Switching Point 16. The Service Control Point 30 receives queries from the Service Switching Point 16 and determines the destination telephone number. The Service Control Point 30 receives and processes event messages from the Service Switching Point and formulates and sends responses to the Service Switching Point. The Service Control Point 30 can process accounting and statistical information, such as the number of the calling party, the dialed intelligent network number, duration and type of ringing tone call waiting signals, and other similar call parameters. The Service Control Point 30 interfaces with and receives commands from controlling services and service features of the Services Management System (SMS) 32. The Service Control Point 30 in accordance with the present invention can be an AT&T A-I-Net™ Service Control Point.

In one aspect of the present invention, the Service Control Point 30 interfaces with the network 12 using a plurality of 56 kb/s or 56 kb/s X.25 links. It can interface with operations support systems such as Services Management System 32, Data Base Administration System 36, and the Signal Engineering and Administration Center 38 using duplicated 9.6 kb/s BX.25 links. The SEAC 38 allows operational and administrative support for Signal Transfer Points 40 that make up the CCS7 network 34. The SEAC 38 contains routing information used for routing a query to a Service Control Point 30. It also updates STP routing, grows SS7 links, or collects message data and traffic.

The Service Control Point 30 accommodates growth. Processing power or memory can be added to an in-service Service Control Point without interrupting service. It is also accommodates retrofit, allowing new software to be loaded without disrupting service.

One type of hardware environment for a Service Control Point 30 that could be used for the present invention includes a set of front-end processors for SS7 protocol processing such as the Message Transfer Part and the Signaling Connection Control Part. These front-end processors use a dual-ethernet configuration with Central Processor Units in the back end. These Central Processor Units perform the SS7 application layer protocol processing referred to as the Transaction Capabilities Application Part as well as the appropriate query processing. For some applications, the data required to handle queries is stored in the CPU main memory, and for other applications data resides in a disk subsystem. The Central Processor Units could share a disk system which is accessed through a duplicated bus interfacing with dual disk controllers. These could support a community of dual-ported shadowed disks.

During normal operation, the Central Processing Units are processing traffic. However, if one or more processors fail, the remaining processors can still handle full traffic volume during the busy hour through productive redundancy or load sharing. In another type of active/standby system, a standby processor is idle until a failure occurs in the active unit. The standby is then switched into service.

The architecture of one type of Service Control Point software is illustrated in Figure 2 and shows six major subsystems. Three of the subsystems are interfaces. The Service Network Interface (SNI) 43 has System 7 protocol software -- Message Transfer Part, Signaling Connection Control Part, and Transaction Capabilities Application Part, or the equivalent for the X.25 protocol. The Support System Interface (SSI) 44 contains BX.25 protocol software and link recovery software for the interface with the Service Management System. The Maintenance and Operations Console (MOC) 46 subsystem has a craftsperson interface with color graphics, windowing, and icons.

The Node Administration subsystem 48 contains administrative tables and measurements data and the like. The Node Manager 50 has fault recovery and diagnostic software and is used for start up and shut down, and support growth and retrofit without service interruption. It can detect a problem with a process or data, and can accomplish and escalating sequence of recovery actions until the problem is cleared.

These five subsystems can comprise the Service Control Point platform. Service application software is written to run on that platform using an Application Programming Interface (API). The SCP software can support multiple applications, and application software has been written and deployed for 800 Service 52, Alternate Billing Services (ABS) 54, and Private Virtual Network (PVN) 56.

The Services Management System 32 is a management and provisioning system that serves as an intelligent network service administration platform. The Services Management System 32 formulates and sends commands to the Service Control Point 30 to control services and service features. The Services Management System illustratively is an AT&T A-I-Net™ Service Management System.

The Intelligent Processor 22 is associated with a Service Switching Point 16 and has specialized functionality, such as a voice response unit 24 for speech recognition (identifying spoken words) and voice recognition (recognizing the voice of a particular speaker) capability. The Intelligent Processor not only recognizes words, but also converts analog signals into digital signals. The Intelligent Processor 22 also may perform the functions of a video signal generator or video signal database to provide images for call waiting signals with video telephone calls.

The Intelligent Processor 22 can be part of a separate network element, or may be part of a multi-media Service Control Point (SCP). In addition, the intelligent processor may be part of or coupled to an SSP 16 or a database 10. Other services for the Intelligent Processor 22 may include voice digit dialing and voice recognition for authenticating the identity of an individual as well as other services. Intelligent Processor equipment suitable for use with the present invention are well known in the art of intelligent network systems.

In accordance with the present invention, the system includes "triggering", i.e., a Service Switching Point 16 determines when a query message requesting call processing instructions will be sent to a Service Control Point 30. For example, the call can include predetermined discriminators, such as a cut-through code and certain NPA or 800 number for switching the call to a predetermined Service Switching Point and "triggering" a query to a Service Control Point.

In accordance with the present invention, the database 10 includes speech models corresponding to entity names as shown in Fig. 3. The speech models may be created from digitized utterances using well known algorithms and voice recognition training techniques. The speech models are then stored in the database 10 for later interaction with the previously described intelligent network elements to provide voice dialing service to callers.

In accordance with the present invention, the method for using voice dialing service is described with reference to the flow chart of Figures 4A and 4B. In step 100, a caller dials a call discriminator, such as a cut-through code or 800 number sequence. In response, a local exchange carrier switches the call to a predetermined switch (SSP 16), having an associated intelligent processor, for providing voice dialing service in accordance with the present invention. In step 102, the call is received at the switch 16. In step 104, an announcement is played to the caller prompting the caller to select an entity listing. Typically, the entity is a company or a directory service. However, the entity may be any entity having telephone service reachable through the public switches telephone network. The announcement may be played by an NCSX coupled to the SSP.

After decoding, in step 106, the switch 16 receives a response to the announcement from the caller. The caller may respond using keys of the keypad for DTMF signaling to the switch. Alternately, the caller may respond by uttering a response requested by the announcement played in step 104. Under either scenario, after decoding in step 106, the decoded response is analyzed. If the response is determined to indicate a company listing in step 108, then step 112 begins. If a company listing is not indicated, then in step 110 the decoded response is checked to see if a directory listing was specified. If so, then step 124 begins. Alternately, if the caller's response could not be mapped into the available outcomes, then in step 104 begins again and the caller is again prompted for a response. According to the method, steps 104-110 are optional in that the caller may not be prompted to specify a type of entity for calling. But rather, in one embodiment of the invention, all listings within the database 10 are accessible using the voice dialing feature without specifying the type of entity. In an alternate embodiment, separate databases are maintained by entity type, with each database being accessible by a separate voice dialing service telephone number.

In step 112, the caller is prompted for a company name, to which the caller responds with an utterance. The prompt may be provided, for example, by the NCSX coupled to the SSP 16. In step 114, the caller's utterance is received at the switch and digitized. Subsequently in step 116, the switch 16 queries the database 10 with the digitized utterance. Optionally in step 116, the switch 16 includes within the query the calling telephone number or at least the area code thereof to the database 10 using ANI. In step 118, the received digitized utterance is compared with each speech model stored within the database 10, and the speech model that most closely matches the digitized utterance is identified. Step 118 may be performed by an intelligent processor associated with the database 10 or a service control point 30 coupled to the database 10.

The database 10, as shown in Fig. 3, includes at least one destination number corresponding to each speech model. After the speech model having the closest match is identified in step 118, in step 120 a destination number is selected. In the event that the speech model selected has only one destination number, then that destination number is returned to the switch 16 for automatic routing of the call in step 122. Alternately, if the identified speech model has more than one destination telephone number, one of the destination numbers must be selected in step 120. This is done based on an area code or telephone number of the calling party provided to the database 10 during the query. This feature allows one to connect conveniently to a local branch of a geographically dispersed company using voice dialing. For example, the caller may use the voice dialing service to call "Triple A" company, an entry for which is shown in Fig. 3. Triple A maintains offices around the country. During step 120, the area code or telephone number of the caller is used as a basis for selecting the destination telephone number of a Triple A branch closest to the area code or number of the caller. Thus, the caller will automatically be connected to a proximately located branch of Triple A when the call is routed in step 122.

If the caller has been determined to have selected a directory listing in 110, then in step 124 the caller is prompted to speak a city and a state. The caller may be prompted to speak one at a time or both in step 124. In step 126, the switch 16 receives and digitizes the caller's utterance. In step 128, the switch queries the database with the digitized utterance. In step 130, the digitized utterance is compared to the speech models within the database 10 and the closest match is identified. Referring to Fig. 3, each directory listing telephone number in the database 10 has only one corresponding number. Therefore, in step 132 the destination number corresponding to the speech model identified is returned to the switch 16 for automatic routing of the call to the destination telephone number.

It is to be understood that the above description is only one preferred embodiment of the invention. Numerous other arrangements may be devised by one skilled in the art without departing from the spirit and scope of the invention.

## Claims

1. A method of providing a voice dialing service to a caller within a public switched telephone network, comprising the steps of:
receiving a call at a switch specified by a service number associated with the voice dialing service;
prompting the caller to speak a entity name, without authenticating the caller as a subscriber;
receiving the spoken entity name at the switch;
digitizing the spoken entity name;
querying a database coupled to the switch with the digitized spoken entity name, the database including a plurality of speech models, each speech model corresponding to an entity name and the database having at least one destination number corresponding to each speech model;
identifying the speech model having a closest match to the digitized spoken entity name;
selecting one of the at least one destination number corresponding to the identified speech model; and
routing automatically the call to the selected destination number.

2. The method according to claim 1, further comprising the steps of:
including an area code associated with the calling party in the querying step; and
selecting one of the at least one destination number based on the area code.

3. The method according to claim 1, further comprising the steps of:
performing ANI on the received call;
sending the ANI result to the database in the querying step; and
selecting one of the at least one destination number based on the ANI result.

4. A method of providing a voice dialing service to a caller within a public switched telephone network, comprising the steps of:
receiving a call at a switch specified by a service number associated with the voice dialing service;
prompting the caller to speak a locality name, without authenticating the caller as a subscriber;
receiving the spoken locality name at the switch;
digitizing the spoken locality name;
querying a database coupled to the switch with the digitized spoken locality name, the database including a plurality of speech models, each speech model corresponding to a locality name and the database having a destination number corresponding to each speech model;
identifying the speech model having a closest match to the digitized spoken locality name;
selecting one of the at least one destination number corresponding to the identified speech model; and
routing automatically the call to the selected destination number.

5. The method according to claim 4, wherein the locality name is a city and state.

6. The method according to claim 4, wherein the destination number corresponds to a directory listing service servicing the locality spoken by the caller.

7. A method of providing a voice dialing service to a caller within a public switched telephone network, comprising the steps of:
receiving a call at a switch specified by a service number associated with the voice dialing service;
prompting the caller to select a type of entity for calling, without authenticating the caller as a subscriber to the voice dialing service;
decoding a selection from the caller;
prompting the caller for an utterance based on the selection;
receiving the utterance at the switch;
digitizing the utterance;
querying a database coupled to the switch with the digitized utterance, the database including a plurality of speech models, each speech model corresponding to an entity and the database having at least one destination number corresponding to each speech model;
identifying the speech model having a closest match to the digitized spoken entity name;
selecting one of the at least one destination number corresponding to the identified speech model; and
routing automatically the call to the selected destination number.

8. A system for providing a voice dialing service to a caller through a public switched telephone network having a plurality of interconnected switches, the system comprising:
a database within a public switched telephone network, the database including a plurality of speech models, each speech model corresponding to an entity and the database having at least one destination number corresponding to each speech model; and
a switch, coupled to the database, the switch launching a query to the database in response to receiving a call to a predetermined service number, the query including a digitized utterance from a caller on the call, and the switch automatically routing the call to one of the at least one destination number returned from the database corresponding to a speech model having a closest match to the digitized utterance.

9. The system according to claim 8, wherein the switch provides an area code of the caller in the query and the destination number returned from the database to the switch is selected based on the area code.

10. The system according to claim 8, wherein the switch provides an ANI result in the query and the destination number returned from the database to the switch is selected based on the area code.
